# EUROPEAN PATENT APPLICATION

(11) **EP 4 603 808 A1**
(43) Date of publication of application: **20.08.2025**
(21) Application number: 23884829.5
(22) Date of filing: 30.10.2023
(51) Int. Cl.: G01J 3/28, G01N 21/25

(54) **SPECTROMETER AND ELECTRONIC DEVICE**

(30) Priority: 02.11.2022 CN 202211367259
(71) Applicant: Huawei Technologies Co., Ltd., Shenzhen, Guangdong 518129 (CN); Shanghai Institute of Technical Physics Chinese Academy of Sciences, Hongkou District Shanghai 200083 (CN)
(72) Inventor: HE, Zhiping, Shanghai 200083 (CN); ZHENG, Yuanliao, Shenzhen, Guangdong 518129 (CN); LI, Feifei, Shanghai 200083 (CN); LI, Jinning, Shanghai 200083 (CN); WANG, Yang, Shanghai 200083 (CN); GUI, Yuhua, Shanghai 200083 (CN)
(74) Representative: Körber, Martin Hans
(86) International application number: PCT/CN2023/127680
(87) International publication number: WO 2024/093899

(57) **Abstract**

A spectrometer (100) and an electronic device (1200), used for environmental monitoring, biomedical therapy, and food safety. The spectrometer (100) includes a window (01), an active light source (03), a window sheet (02), a light splitting module (04), a detection module (05), and a data processing module (06). A mirror-symmetric reflection film that can reflect a specific band is coated on both sides of the window sheet (02). That is, both reflection spectrum information of the active light source (03) and reflection spectrum information of a to-be-measured object can be obtained through one measurement without adding an additional accessory or increasing a volume of an instrument, to obtain reference reflectance spectrum information of the to-be-measured object. A spectral reference measurement process and a spectral calibration process can be simplified, and the reference reflectance spectrum information of the to-be-measured object can be quickly obtained.

## Description

This application claims priority to Chinese Patent Application No. 202211367259.0, filed with the China National Intellectual Property Administration on November 2, 2022 and entitled "SPECTROMETER AND ELECTRONIC DEVICE", which is incorporated herein by reference in its entirety.

### TECHNICAL FIELD

This application relates to the communication field, and more specifically, to a communication method and an apparatus.

### BACKGROUND

A spectrum can reflect molecular structure information of a substance, and plays an important role in fields such as biology, chemistry, pharmaceutical materials, food industry, and geological exploration. With improvement of living standards, a growing quantity of people pay more attention to quality of life, such as food safety and health monitoring, which poses a rapidly growing demand on spectrum detection in daily life.

A spectroscopic instrument can perform qualitative and quantitative analysis on a structure and composition of a substance non-destructively based on optical principles, and is one of the most widely used analytical tools in scientific research and industry. Although a size of a current commercial portable or handheld miniature spectroscopic instrument has been gradually reduced to a centimeter level or even a millimeter level, in an actual long-term use process, a reference test and a spectrum calibration test of the instrument is complex and professional, and it is difficult to resolve a problem of spectrum consistency.

Therefore, how to quickly obtain spectrum information of a to-be-measured object is an urgent problem to be resolved.

### SUMMARY

Embodiments of this application provide a spectrometer and an electronic device, to simplify a spectrum detection process and effectively quickly obtain spectrum information of a to-be-measured object.

According to a first aspect, a spectrometer is provided, including: a window, an active light source, a window sheet, a light splitting module, a detection module, and a data processing module, where the window sheet is mounted in the window, the window sheet and the light splitting module share an optical axis, a mirror-symmetric reflection film is coated on both sides of the window sheet, and a band range of the reflection film is a first band range;
the active light source is configured to transmit a first light beam to the window sheet;
the window sheet is configured to reflect a second light beam to the light splitting module, where a band range of the second light beam is the first band range;
the window sheet is further configured to transmit a third light beam to a to-be-measured object, so that the third light beam is incident onto the light splitting module through diffuse reflection on a surface of the to-be-measured object, where a band range of the third light beam is a band range in a band range of the first light beam other than the first band range;
the light splitting module is configured to split a mixed light beam of the second light beam and the third light beam;
the detection module is configured to detect split light beams to obtain a first mixed spectrum;
the data processing module is configured to separate the first mixed spectrum to obtain a full-spectrum reflection spectrum of the active light source and a non-referenced full-spectrum reflection spectrum of the to-be-measured object; and
the data processing module is further configured to determine a reference full-spectrum reflectance spectrum of the to-be-measured object based on the full-spectrum reflection spectrum of the active light source and the non-referenced full-spectrum reflection spectrum of the to-be-measured object.

In this technical solution of this application, a self-reference spectrometer is provided. The mirror-symmetric reflection film that can reflect a specific band (for example, three specific center wavelengths and bandwidths in the first band range) is coated on both sides of the window sheet, to obtain reference reflectance spectrum information of the to-be-measured object. That is, both the reflection spectrum of the active light source and the reflection spectrum of the to-be-measured object may be obtained through one measurement without adding an additional accessory or increasing a volume of an instrument, to obtain the reference reflectance spectrum of the to-be-measured object based on the ratio between the two. In this implementation, a spectral self-reference measurement process can be simplified, and spectrum information of the to-be-measured object can be effectively and quickly obtained.

With reference to the first aspect, in some implementations of the first aspect, that the data processing module is configured to separate the first mixed spectrum to obtain a full-spectrum reflection spectrum of the active light source and a non-referenced full-spectrum reflection spectrum of the to-be-measured object is specifically:
obtaining a reflection spectrum of the active light source in the first band range based on the first mixed spectrum and a pre-stored reflection spectrum of the active light source;
calculating a difference between the first mixed spectrum and the reflection spectrum of the active light source in the first band range, to obtain a non-referenced reflection spectrum of the to-be-measured object;
performing interpolation calculation on the non-referenced reflection spectrum of the to-be-measured object, to obtain the non-referenced full-spectrum reflection spectrum of the to-be-measured object; and
obtaining the full-spectrum reflection spectrum of the active light source through fitting based on a derivation function of the pre-stored reflection spectrum of the active light source and the reflection spectrum of the active light source in the first band range.

With reference to the first aspect, in some implementations of the first aspect, the data processing module is further configured to:
calibrate the first mixed spectrum based on the pre-stored reflection spectrum of the active light source.

For example, the pre-stored reflection spectrum of the active light source may be understood as that the active light source is turned on during factory calibration, and reflection spectrum information measured by the spectrometer includes a center wavelength position, a bandwidth, and intensity of the active light source in the first band range, and is used to calibrate a spectrum drift of the spectroscopic instrument or the active light source in a subsequent actual use process.

For example, the derivation function of the pre-stored reflection spectrum of the active light source may be understood as that during factory calibration, the reflection spectrum of the active light source is obtained by fitting three specific center wavelengths in the first band range. The three specific center wavelengths are known, and the reflection spectrum of the active light source is known, so that a fitting model, that is, a derivation function F1, is obtained through reverse derivation. F1 is used to determine, in a subsequent actual use process, an actual full-spectrum reflection spectrum of the active light source based on reflection spectrums of the active light source on the three specific bands that are collected in real time.

In this implementation, a self-calibration spectrometer is provided. The first mixed spectrum is calibrated by fitting an actual reflection spectrum of the active light source, so that accuracy of spectrum measurement can be ensured. This is because in a long-term use process of the active light source, intensity of each wavelength may change, resulting in an error in measurement data. Through self- calibration of the spectrometer, the actual full-spectrum reflection spectrum of the active light source is finally obtained. This implementation can simplify a spectrum calibration process, and ensure high quality and stability of a collected reflection spectrum.

With reference to the first aspect, in some implementations of the first aspect, there is one or a plurality of active light sources, and the plurality of active light sources are evenly distributed in an inner edge area of the window sheet.

In this implementation, the active light sources should be evenly distributed at two ends (for example, an edge area inside the instrument) of or around the window sheet, that is, in the field of view of the spectroscopic instrument, to ensure integrity of spectrum collection. In addition, blocking of diffuse reflection light on a surface of the to-be-measured object should be avoided as much as possible to reduce an energy loss of the to-be-measured object. In other words, the active light source should not be placed on an optical path between the to-be-measured object and the light splitting module as much as possible.

With reference to the first aspect, in some implementations of the first aspect, the first light beam fully covers the entire window.

In this implementation, the first light beam emitted by the active light source is restricted to fully cover the window, so that the second light beam and the third light beam reflected by the window sheet are fully incident onto the light splitting module while integrity of collected spectrum information is ensured, thereby ensuring that energy of the light beam is not lost as much as possible, and improving accuracy of spectrum collection.

With reference to the first aspect, in some implementations of the first aspect, a bandwidth of the reflection film is less than or equal to a spectral resolution of the spectrometer.

It should be understood that a bandwidth design of the reflection film needs to strike a balance between the recovery accuracy of the spectrum of the to-be-measured object and coating process complexity of the window sheet. A lower bandwidth of the reflection film indicates that it is easier to accurately recover the reflection spectrum of the to-be-measured object, but the requirement for coating is higher. On the contrary, a higher bandwidth of the reflection film indicates that it is more difficult to accurately recover the reflection spectrum of the to-be-measured object, but the requirement for coating is lower.

In this implementation, the bandwidth of the reflection film is set to be less than or equal to the spectral resolution of the spectrometer, that is, a value of the bandwidth of the reflection film is greater than a value of the spectral resolution of the spectrometer. This can ensure that the obtained reflection spectrum of the active light source in the first band range is more accurate.

With reference to the first aspect, in some implementations of the first aspect, a quantity of bands of the reflection film is greater than or equal to one.

For example, the quantity of bands of the reflection film is three.

It should be understood that a spectrum of the to-be-measured object and the recovery accuracy of the spectrum of the active light source need to be considered in designing the quantity of bands of the reflection film. A larger quantity of bands of the reflection film indicates that it is more difficult to accurately recover the reflection spectrum of the to-be-measured object, but it is easier to accurately recover the spectrum of the active light source. On the contrary, a smaller quantity of bands of the reflection film indicates that it is easier to accurately recover the reflection spectrum of the to-be-measured object, but it is more difficult to accurately recover the spectrum of the active light source.

In this implementation, the quantity of bands of the reflection film is set to three, so that a spectrum sampling interval less than three times can be obtained, thereby avoiding impact of a loss of spectrum information of the to-be-measured object due to deduction of some spectrum range information. Because a spectrum of a near infrared spectrum range includes a relatively small quantity of characteristic peaks, that is, a spectrum of an active light source is relatively continuous, a spectrum sampling interval less than three times can prevent a characteristic such as an absorption peak of the to-be-measured object from being missed, thereby improving accuracy of spectrum detection.

According to a second aspect, an electronic device is provided, including the spectrometer according to any one of the first aspect and the implementations of the first aspect.

According to a third aspect, an electronic device is provided, including a processor and the spectrometer according to any one of the first aspect and the implementations of the first aspect. The spectrometer includes a window, an active light source, a window sheet, a light splitting module, and a detection module, where the window sheet is mounted in the window, the window sheet and the light splitting module share an optical axis, a mirror-symmetric reflection film is coated on both sides of the window sheet, and a band range of the reflection film is a first band range;
the active light source is configured to transmit a first light beam to the window sheet;
the window sheet is configured to reflect a second light beam to the light splitting module, where a band range of the second light beam is the first band range;
the window sheet is further configured to transmit a third light beam to a to-be-measured object, so that the third light beam is incident onto the light splitting module through diffuse reflection on a surface of the to-be-measured object, where a band range of the third light beam is a band range in a band range of the first light beam other than the first band range;
the light splitting module is configured to split a mixed light beam of the second light beam and the third light beam;
the detection module is configured to detect split light beams to obtain a first mixed spectrum;
the data processing module is configured to separate the first mixed spectrum to obtain a full-spectrum reflection spectrum of the active light source and a non-referenced full-spectrum reflection spectrum of the to-be-measured object;
the processor is configured to receive, from a spectrometer, a full-spectrum reflection spectrum of an active light source and a non-referenced full-spectrum reflection spectrum of the to-be-measured object; and
the processor is further configured to determine a reference full-spectrum reflectance spectrum of the to-be-measured object based on the full-spectrum reflection spectrum of the active light source and the non-referenced full-spectrum reflection spectrum of the to-be-measured object.

In this technical solution of this application, a self-reference spectrometer is provided. The mirror-symmetric reflection film that can reflect a specific band (for example, three specific center wavelengths and bandwidths in the first band range) is coated on both sides of the window sheet, to obtain reference reflectance spectrum information of the to-be-measured object. That is, both the reflection spectrum of the active light source and the reflection spectrum of the to-be-measured object may be obtained through one measurement without adding an additional accessory or increasing a volume of an instrument, to obtain the reference reflectance spectrum of the to-be-measured object based on the ratio between the two. In this implementation, a spectral self-reference measurement process can be simplified, and spectrum information of the to-be-measured object can be quickly and accurately obtained.

With reference to the third aspect, in some implementations of the third aspect, that the processor is configured to separate the first mixed spectrum to obtain a full-spectrum reflection spectrum of the active light source and a non-referenced full-spectrum reflection spectrum of the to-be-measured object is specifically:
obtaining a reflection spectrum of the active light source in the first band range based on the first mixed spectrum and a pre-stored reflection spectrum of the active light source;
calculating a difference between the first mixed spectrum and the reflection spectrum of the active light source in the first band range, to obtain a non-referenced reflection spectrum of the to-be-measured object;
performing interpolation calculation on the non-referenced reflection spectrum of the to-be-measured object, to obtain the non-referenced full-spectrum reflection spectrum of the to-be-measured object; and
obtaining the full-spectrum reflection spectrum of the active light source through fitting based on a derivation function of the pre-stored reflection spectrum of the active light source and the reflection spectrum of the active light source in the first band range.

With reference to the third aspect, in some implementations of the third aspect, the data processing module is further configured to:
calibrate the first mixed spectrum based on the pre-stored reflection spectrum of the active light source.

In this implementation, a self-calibration spectrometer is provided. The first mixed spectrum is calibrated by fitting an actual reflection spectrum of the active light source, so that measurement accuracy can be ensured. This is because in a long-term use process of the active light source, intensity of each wavelength may change, resulting an error in measurement data. Through self-calibration of the spectrometer, the actual full-spectrum reflection spectrum the active light source is finally obtained. This implementation can simplify a spectrum calibration process, and ensure high quality and stability of a collected reflection spectrum.

With reference to the third aspect, in some implementations of the third aspect, there is one or a plurality of active light sources, and the plurality of active light sources are evenly distributed in an inner edge area of the window sheet.

In this implementation, the active light sources should be evenly distributed at two ends (for example, an edge area inside the instrument) of or around the window sheet, that is, in the field of view of the spectroscopic instrument, to ensure integrity of spectrum collection. In addition, blocking of diffuse reflection light on a surface of the to-be-measured object should be avoided as much as possible to reduce an energy loss of the to-be-measured object. In other words, the active light source should not be placed on an optical path between the to-be-measured object and the light splitting module as much as possible.

With reference to the third aspect, in some implementations of the third aspect, the first light beam fully covers the entire window.

In this implementation, the first light beam emitted by the active light source is restricted to fully cover the window, so that the second light beam and the third light beam reflected by the window sheet are fully incident onto the light splitting module while integrity of collected spectrum information is ensured, thereby ensuring that energy of the light beam is not lost as much as possible, and improving accuracy of spectrum collection.

With reference to the third aspect, in some implementations of the third aspect, a bandwidth of the reflection film is less than or equal to a spectral resolution of the spectrometer.

It should be understood that a bandwidth design of the reflection film needs to strike a balance between the recovery accuracy of the spectrum of the to-be-measured object and coating process complexity of the window sheet. A lower bandwidth of the reflection film indicates that it is easier to accurately recover the reflection spectrum of the to-be-measured object, but the requirement for coating is higher. On the contrary, a higher bandwidth of the reflection film indicates that it is more difficult to accurately recover the reflection spectrum of the to-be-measured object, but the requirement for coating is lower.

In this implementation, the bandwidth of the reflection film is set to be less than or equal to the spectral resolution of the spectrometer, that is, a value of the bandwidth of the reflection film is greater than a value of the spectral resolution of the spectrometer. This can ensure that the obtained reflection spectrum of the active light source in the first band range is more accurate.

With reference to the third aspect, in some implementations of the third aspect, a quantity of bands of the reflection film is greater than or equal to one.

For example, the quantity of bands of the reflection film is three.

It should be understood that a spectrum of the to-be-measured object and the recovery accuracy of the spectrum of the active light source need to be considered in designing the quantity of bands of the reflection film. A larger quantity of bands of the reflection film indicates that it is more difficult to accurately recover the reflection spectrum of the to-be-measured object, but it is easier to accurately recover the spectrum of the active light source. On the contrary, a smaller quantity of bands of the reflection film indicates that it is easier to accurately recover the reflection spectrum of the to-be-measured object, but it is more difficult to accurately recover the spectrum of the active light source.

In this implementation, the quantity of bands of the reflection film is set to three, so that a spectrum sampling interval less than three times can be obtained, thereby avoiding impact of a loss of spectrum information of the to-be-measured object due to deduction of some spectrum range information. Because a spectrum of a near infrared spectrum range includes a relatively small quantity of characteristic peaks, that is, a spectrum is relatively continuous, that the spectrum sampling interval is restricted to be less than three times can prevent a characteristic such as an absorption peak of the to-be-measured object from being missed, thereby improving accuracy of spectrum detection.

### BRIEF DESCRIPTION OF DRAWINGS

FIG. 1 is a diagram of a structure of a spectrometer 100 according to an embodiment of this application;
FIG. 2 is a diagram of a planar structure of a window and a window sheet according to an embodiment of this application;
FIG. 3 is a diagram of a planar structure of a window sheet and a reflection film according to an embodiment of this application;
FIG. 4 is a schematic flowchart of a spectral self-reference detection method 400 according to an embodiment of this application;
FIG. 5 is a schematic flowchart of a spectral self-reference and self-calibration detection method 500 according to an embodiment of this application;
FIG. 6 to FIG. 11 are diagrams of results of spectral self-reference and self-calibration according to embodiments of this application; and
FIG. 12 is a diagram of a structure of an electronic device 1200 according to an embodiment of this application.

### DESCRIPTION OF EMBODIMENTS

The following describes technical solutions of this application with reference to the accompanying drawings.

A spectroscopic instrument is an important part of a modern optical instrument. The spectroscopic instrument can non-destructively perform qualitative and quantitative analyses on a structure and composition of a substance based on optical principles, and has advantages such as a high analysis accuracy, a large measurement range, and a high measurement speed, and therefore is widely used in scientific research, information, biomedical therapy, food and drug testing, agriculture, environment, and security protection. In particular, light, small, portable, low-power, and low-cost miniature spectroscopic instruments are developing continuously, and are widely used in daily life fields such as fruit sugar degree detection, food freshness detection, non-invasive blood glucose detection, indoor natural gas leakage detection, and detection of harmful volatiles in furniture.

For the foregoing applications, composition and content of a substance are mainly studied by obtaining spectrum information of a to-be-measured object. Because a light source is aged after long-term use, or an instrument deviates after long-term use, a detection result of the to-be-measured object may be inaccurate. Therefore, a self-reference spectrum of the to-be-measured object is considered in studying the composition and content of the substance. That is, background noise can be effectively reduced in a spectrum detection process by obtaining reflectance spectrum information of the to-be-measured object, to reduce adverse impact of an external condition on a spectrum signal.

Reference measurement may be used to obtain the reflectance spectrum information of the to-be-measured object, that is, a ratio of energy of a reference optical signal incident onto the to-be-measured object to energy of an optical signal reflected by the to-be-measured object is measured. In an example, radiation calibration is usually performed on an incident light source to obtain the reference optical signal energy that is incident onto the to-be-measured object. However, the energy of the light source is attenuated over time. Therefore, the light source needs to be calibrated periodically, which results in a higher complexity of use. In another example, a diffuse reflection plate is usually placed at a same position as the to-be-measured object, and energy of the received diffuse reflection plate is used as reference information, to obtain the reflectance spectrum information of the to-be-measured object. However, in this manner, the diffuse reflection plate needs to be measured once during each test, and a process is relatively complex. In addition, an additional diffuse reflection component needs to be carried, which results in relatively inconvenient use.

In addition, a special-purpose monochromator needs to be used in a laboratory to calibrate a spectrum of a spectroscopic instrument, so as to obtain more accurate reflectance spectrum information. However, in actual use, the spectrum range may drift due to component aging. Therefore, the spectroscopic instrument needs to be sent to the laboratory for periodic calibration to ensure accuracy of the spectrum range. This calibration method is complex, and the process is professional and complex.

Therefore, how to simplify a reference measurement process and a spectrum calibration process and quickly and accurately obtain reflectance spectrum information of a to-be-measured object is a technical problem to be urgently resolved.

In view of this, this application provides a spectrometer, that is, a self-reference and self-calibration spectrometer, and an electronic device. A mirror-symmetric reflection film that can reflect a specific band is coated on both sides of the window sheet. That is, both spectrum information of the active light source and spectrum information of the to-be-measured object may be obtained through one measurement without adding an additional accessory or increasing a volume of an instrument, to obtain real-time reference reflectance spectrum information of the to-be-measured object. Further, the spectrum of the instrument can be calibrated, and the spectrum drift of the instrument can be corrected. In this way, the accuracy and stability of the spectrum measurement can be ensured while the operation process is simplified.

For ease of understanding the technical solutions of this application, some concepts and technologies in this application are briefly described.

### 1. Reflectance

Reflectance indicates a percentage of radiation energy reflected by an object to total radiation energy. Different objects have different reflectance, which mainly depends on properties (surface conditions) of the objects, and a wavelength and an incident angle of an incident electromagnetic wave. The reflectance is always less than or equal to 1. The reflectance may be used to determine the properties of the objects.

### 2. Polychromatic light

Polychromatic light is light formed by combining several types of monochromatic light, also known as "composite light", and includes light of a plurality of frequencies, such as solar light, arc light, and light emitted by an incandescent lamp. A general light source is a polychromatic light formed by mixing monochromatic light of different wavelengths. Light emitted by the sun in nature and artificially manufactured fluorescent lamps, incandescent lamps, and the like is polychromatic light. Judgment method: Polychromatic light is not just white light of the sun, but white light is definitely polychromatic light.

### 3. Common optical axis (common optical axis)

An optical axis is a center line of a light beam (light beam), or a symmetry axis of an optical system. The light beam rotates around the optical axis, and there should be no change in optical characteristics. All surfaces with focal power use the optical axis as the symmetry axis, and curvature centers of all the surfaces are located on the optical axis.

### 4. Spectral resolution

A spectral resolution is a minimum wavelength spacing that can be detected, and indicates a spectral detection capability. A resolution of the spectrometer is also known as a band width (band width), which is a recording width of a detector in a wavelength direction. The spectral resolution is strictly defined as a wavelength width when the instrument reaches 50% of a maximum spectral response. For a continuous spectrum, the spectral resolution may be simply defined as a quantity of waves Δv (cm-1) or a wavelength spacing between two adjacent absorption characteristics. For example, a spectral resolution of a multispectral imaging technology is about 10.

### 5. Infrared light

Infrared light, which generally means infrared (Infrared, IR), is an electromagnetic wave with a frequency between a frequency of microwave and a frequency of visible light, has a frequency ranging from 0.3 THz to 400 THz, and is a general term for radiation with a wavelength ranging from 760 nm to 1000 um in a vacuum. The infrared light is invisible light with a frequency lower than a frequency of red light.

### 6. Base

In a metal material, a base is a main phase or a main aggregate, that is, a main component of a complex-phase alloy. In a thermal spraying process, an object used to deposit a thermal spraying layer is referred to as a base. In repair, a base is a mechanical part that needs to be repaired. In architecture, a base is a main structure or enclosure of a building. In X-ray fluorescence analysis in analytics, a base is an entire sample except for an analytical element.

### 7. Interpolation algorithm

Interpolation is an important method for approximation by using a discrete function. Interpolation may be used to estimate approximate values of the function at other points based on values of the function at a finite quantity of points. Common interpolation algorithms include but are not limited to a nearest neighbor interpolation method, a bilinear interpolation method, and a bicubic interpolation method.

For ease of understanding the technical solutions of this application, the following descriptions are provided.

In this application, "at least one" means one or more, and "a plurality of" means two or more. In text descriptions of this application, the character "/" generally indicates an "or" relationship between associated objects.

In this application, "first", "second", and various numbers (for example, #1 and #2) are merely for differentiation for ease of description, and are not used to limit the scope of embodiments of this application. Sequence numbers of the following processes do not mean an execution sequence. The execution sequence of the processes should be determined based on functions and internal logic of the processes, and should not be construed as any limitation on an implementation process of embodiments of this application.

In this application, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

In this application, "example", "for example", and the like indicate giving an example, an illustration, or a description. An embodiment or design scheme described with "example" or "for example" should not be explained as being more preferred or having more advantages than another embodiment or design scheme. The term such as "example" or "for example" is used for presenting a related concept in a specific manner for ease of understanding.

In this application, that a first feature is "above" or "below" a second feature means that the first feature and the second feature are in direct contact, or the first feature and the second feature are in indirect contact through an intermediate medium. In addition, that the first feature is "above" the second feature may be that the first feature is over or obliquely above the second feature, or only indicates that the first feature has a horizontal height greater than that of the second feature. That the first feature is "below" the second feature may be that the first feature is under or obliquely below the second feature, or only indicates that the first feature has a horizontal height less than that of the second feature.

It should be noted that orientation or position relationships indicated by terms "center", "above", "below", "front", "rear", and the like are orientation or position relationships based on the accompanying drawings, and are merely intended for ease of describing this application and simplifying description, rather than indicating or implying that an apparatus or element needs to have a specific orientation or needs to be constructed and operated in a specific orientation. Therefore, such terms cannot be construed as a limitation on this application.

In this application, unless otherwise specified and limited, terms such as "install", "fasten", and "dispose" should be understood in a broad sense. When an element is referred to as being "fastened" or "disposed" on another element, the element may be directly on the other element, or an intermediate element may exist. When one element is considered to be "connected to" another element, it may be directly connected to another element, or an intermediate element may exist at the same time.

The following describes the technical solutions provided in this application in detail with reference to the accompanying drawings.

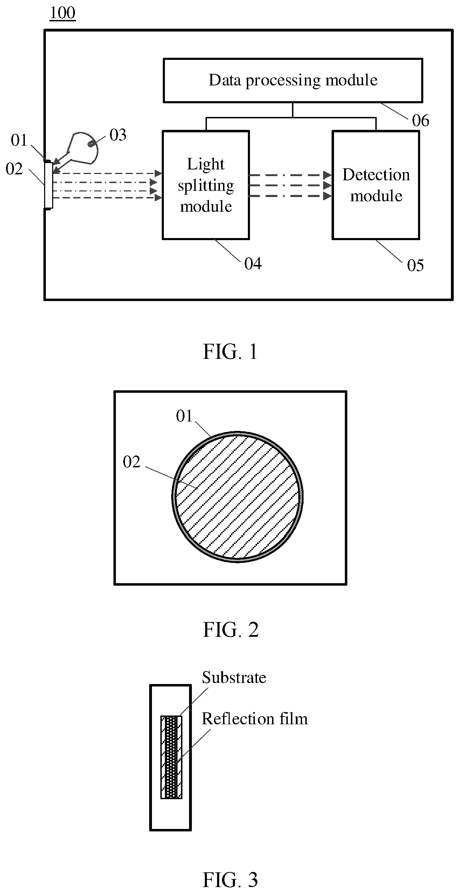

FIG. 1 is a diagram of a structure of a spectrometer 100 according to an embodiment of this application. As shown in FIG. 1, the spectrometer 100 includes an instrument window 01, a window sheet 02, an active light source 03, a light splitting module 04, a detection module 05, and a data processing module 06. As shown in FIG. 2, the window sheet 02 is mounted in the instrument window 01, and the window sheet 02 shares an optical axis with the light splitting module 04, so that light beams (for example, a second light beam and a third light beam) may be incident onto the light splitting module 04 in a collimated manner. It should be understood that the window sheet 02 is a transparent optical plate that protects an electronic element, a sensor, or a semiconductor element in an optical path; and the window sheet 02 does not change an optical amplification rate, and affects only an optical path length in the optical path.

In this technical solution of this application, a reflection film on a specific band is coated on both sides of the window sheet 02 to simplify a spectrum detection process. As shown in FIG. 3, reflection films are coated on the substrate of the window sheet 02, to improve reflectance of a first light beam emitted by the active light source 03, so as to reflect the second light beam through the window sheet 02, and obtain spectrum information of the active light source on a specific band. The reflection films coated on both sides of the window sheet 02 are mirror-symmetric. It should be understood that "mirror-symmetric" means that an image in a planar mirror and an object in reality are consistent in up and down directions, but are opposite in right and left directions. Optionally, in addition to the specific band, an anti-reflection film of another band may be coated on both sides of the window sheet 02, to improve transmittance of the first light beam emitted by the active light source 03, so as to obtain reflection spectrum information of the to-be-measured object through diffuse reflection on a surface of the to-be-measured object and through transmission of the third light beam by using the window sheet 02. That is, both the spectrum information of the active light source 03 on the specific band and the reflection spectrum information of the to-be-measured object may be obtained through one measurement, to obtain reference reflectance spectrum information of the to-be-measured object.

It should be noted that the reflection films coated on both sides of the window sheet 02 (or two sides of the window sheet 02) are mirror-symmetric, which can ensure accuracy of a result of spectrum detection, for example, ensure that the third light beam can be returned and incident onto the light splitting module 04 along an original path. For example, mirror-symmetric reflection films on three specific bands (that is, the first band range includes three bands) are coated on both sides of the window sheet 02, which indicates that three layers of reflection films whose band ranges are, for example, 600 nm to 1000 nm, 1200 nm to 1600 nm, and 2000 nm to 2400 nm are sequentially coated on one side of the window sheet 02 starting from a position close to the window sheet 02. Correspondingly, three layers of reflection films whose band ranges are 600 nm to 1000 nm, 1200 nm to 1600 nm, and 2000 nm to 2400 nm are also coated on the other side of the window sheet 02 starting from a position close to the window sheet 02.

It should be understood that the active light source 03 is a polychromatic light source, and a spectrum of the active light source 03 may cover an operating spectrum range of the spectroscopic instrument. To increase energy of a spectrum on a specific band that is reflected by the window sheet 02 into the light splitting module 04, light spots of the active light source 03 should cover the entire window sheet 02. For example, the active light source 03 is disposed on an inner side of the spectrometer 100. As shown in FIG. 1, the active light source 03 is distributed at one end of the window sheet 02.

Optionally, there may be a plurality of active light sources 03. For example, there are two active light sources 03, which are respectively disposed at two ends of the window sheet 02, and are located in an inner edge area of the instrument. In this application, it needs to ensure that the first light beam emitted by the active light source 03 can cover the entire window sheet 02, and that the light beams (for example, the second light beam and the third light beam) are not blocked and are fully incident onto the light splitting module 04.

It should be noted that the active light source 03 should not be disposed on an optical path formed between the window sheet 02 and the light splitting module 04. That is, the active light source 03 does not share an optical axis with the light splitting module 04. In this manner, blocking of the second light beam and the third light beam can be avoided as much as possible, thereby reducing energy loss of the light beams and improving accuracy of spectrum collection.

The light splitting module 04 may perform light splitting processing on a light beam (that is, the second light beam) reflected by the window sheet 02 and a mixed light beam of a light beam (that is, the third light beam) transmitted by the window sheet 02, so that split light beams in different spectrum ranges are incident onto the detection module 05. The detection module 05 may be a charge coupled device (charge coupled device, CCD) or a photodetector of another type. The detector may be a combination of pixels of the detector, and is configured to detect light intensity of light beams in different spectrum ranges at an image point of each wavelength.

The data processing module 06 is connected to the light splitting module 04 and the detection module 05, and is configured to read spectrum information on the light splitting module 04 and the detection module 05 to obtain mixed spectrum information. In addition, the data processing module 06 may further separate the light source spectrum information reflected by the window sheet 02 from the spectrum information reflected by the to-be-measured object. Further, the data processing module 06 may further calibrate spectral drift data of the spectroscopic instrument or the active light source, and reflection spectrum information of the active light source 03 on a specific band that is collected in real time and real-time reflection spectrum information of the to-be-measured object, and finally obtain a true and accurate self-reference reflectance spectrum curve of the to-be-measured object through calculation.

It should be noted that the spectrometer 100 shown in FIG. 1 is merely an example for ease of understanding the solution, and relative distances between components shown in the figure, and shapes and sizes of the components are not necessarily the same as or scaled proportionally with an actual object.

The following describes operating principles of the spectrometer 100 in detail with reference to FIG. 1.

For example, during use of the instrument, the active light source 03 emits the first light beam to the window sheet 02. Because a mirror-symmetric reflection film on a specific band is coated on both sides of the window sheet 02, a light beam of a corresponding specific band in the first light beam is directly reflected by a surface of the window sheet 02 (that is, the second light beam), and is incident onto the light splitting module 04 and the detection module 05 of the instrument, so that light splitting and detection processing are sequentially performed. This prevents an outside light beam including the specific band from entering the instrument and affecting measurement. A light beam of a band other than the specific band in the first light beam is irradiated to the to-be-measured object through the window sheet 02. After diffuse reflection (that is, the third light beam) occurs on a surface of the to-be-measured object, the light beam is incident onto the light splitting module 04 and the detection module 05 of the instrument through the window sheet 02, so that light splitting and detection processing are sequentially performed. The data processing module 05 separates the mixed spectrum information obtained after the splitting and detection processing to obtain real-time reflection spectrum of the active light source 03 and real-time reflection spectrum of the to-be-measured object, and then calculates a ratio between the two to obtain real-time reference reflectance spectrum of the to-be-measured object.

Optionally, the mixed light beam of the second light beam and the third light beam is incident onto the light splitting module 04 of the instrument. The light splitting module 04 may split the incident polychromatic light (that is, the mixed light beam) into light beams in different spectrum ranges, and the light beams are incident onto the detection module 05 for spectral detection. It should be understood that the detection module 05 may respond to all spectral signals of a spectrum range covered by the spectroscopic instrument. Therefore, the spectrum curve finally obtained by the instrument indicates a mixed spectrum, including a spectrum of diffuse reflection that is transmitted to the surface of the to-be-measured object through the window sheet 02, and a reflection spectrum of the active light source 03 on a specific band that is directly reflected by the surface of the window sheet 02.

Further, the data processing module 05 may determine, based on a reflection spectrum (a center wavelength position and a bandwidth) of the active light source calibrated before delivery of the instrument, whether the spectrum of the instrument deviates, so as to implement calibration and fitting of the real-time reflection spectrum of the active light source 03, and obtain an actual non-referenced reflection spectrum of a to-be-measured object through spectrum interception; and then perform interpolation recovery on the separated actual non-referenced full-spectrum reflection spectrum of the to-be-measured object to obtain an actual non-referenced spectrum curve of the to-be-measured object. Then, an actual full-spectrum reflection spectrum of the active light source 03 is derived based on the derivation function F1 of the reflection spectrum of the active light source that is calibrated before delivery and in combination with the actual reflection spectrum of the active light source 03 after the fitting. Finally, the actual reference full-spectrum reflectance spectrum of the to-be-measured object is determined based on the actual full-spectrum reflection spectrum of the active light source 03 and the actual non-referenced full-spectrum reflection spectrum of the to-be-measured object.

In this implementation, not only real-time spectrum calibration can be implemented, but also real-time reference can be performed by using a recovered spectrum of the to-be-measured object and a recovered spectrum of the active light source 03, to obtain an actual reference reflectance spectrum curve of the to-be-measured object. That is, the data processing module 05 may separate and calibrate the non-referenced real-time spectrum of the to-be-measured object in the first mixed spectrum and the reflection spectrum of the active light source 03 on the specific band, and obtain, through calculation, true and accurate reference reflectance spectrum information of the to-be-measured object.

In this technical solution of this application, the spectrometer 100 is a self-reference and self-calibration spectroscopic instrument. The window sheet 02 that can reflect a specific wavelength is designed, that is, a mirror-symmetric reflection film that can reflect a specific band is coated on both sides of the window sheet, so that both the reflection spectrum information on the specific band of the active light source 03 and the reflection spectrum information of the to-be-measured object can be obtained through one measurement, to obtain reference reflectance spectrum information of the to-be-measured object. Further, the spectrometer 100 may further calibrate a collected first mixed spectrum, the real-time reflection spectrum of the active light source, and the non-referenced real-time reflection spectrum of the to-be-measured object by using the reflection spectrum information of the active light source 03 that is pre-stored before delivery. The solution is simple and reliable, and the actual reference full-spectrum reflectance spectrum curve of the to-be-measured object can be obtained without increasing an extra volume.

To better implement recovery of a reflection spectrum of a to-be measured object and a spectrum of a light source, an example is described from perspectives such as a bandwidth of a reflection film on a specific band that is coated on the window sheet 02 and a quantity of bands of the reflection film.

### (1) Bandwidth of the reflection film

It should be understood that the bandwidth of the reflection film on the specific band that is coated on both sides of the window sheet 02 mainly affects recovery accuracy of a reflection spectrum of the to-be-measured object. A lower bandwidth of the reflection film indicates that it is easier to accurately recover the reflection spectrum of the to-be-measured object, and difficulty of coating is higher. On the contrary, a higher bandwidth of the reflection film indicates that it is more difficult to accurately recover the reflection spectrum of the to-be-measured object, and difficulty of coating is lower. Therefore, the bandwidth design of the reflection film on a specific band needs to strike a balance between the recovery accuracy of the reflection spectrum of the to-be-measured object and the processing difficulty of the coating. Based on spectral characteristics of a near infrared spectrum, that is, continuous and no abrupt change, it is a good balance point to set the bandwidth of the reflection film to be not greater than the spectral resolution of the instrument.

That is, a value of the bandwidth of the reflection film is greater than a value of the spectral resolution of the instrument, which can ensure that the obtained reflection spectrum of the active light source 03 is more accurate. Based on calibration of the reflection spectrum of the active light source 03 before delivery of the instrument, a center wavelength position, a peak value, a bandwidth, and the like of the spectrum of the active light source 03 on a specific band (that is, in the first band range) can be accurately obtained through fitting; and then based on the derivation function F1 of the reflection spectrum of the active light source calibrated before delivery, an actual full-spectrum reflection spectrum of the active light source 03 may be recovered.

### (2) Quantity of bands of the reflection film

It should be understood that a quantity of bands of the reflection film on the specific band that is coated on the window sheet 02 mainly affects recovery accuracy of a reflection spectrum of the to-be-measured object and a reflection spectrum of the active light source 03. A larger quantity of bands of the reflection film indicates that it is more difficult to accurately recover the reflection spectrum of the to-be-measured object, but it is easier to accurately recover the reflection spectrum of the active light source 03. On the contrary, a smaller quantity of bands of the reflection film indicates that it is easier to accurately recover the reflection spectrum of the to-be-measured object, but it is more difficult to accurately recover the reflection spectrum of the active light source 03. Therefore, the reflection spectrum of the to-be-measured object and the recovery accuracy of the reflection spectrum of the active light source 03 need to be balanced in designing the quantity of bands of the reflection film on the specific band. Based on the spectral characteristics of near infrared spectrum, such as continuous, no abrupt change, and fewer characteristic peaks, and with reference to the current three-band classical temperature measurement method, it is a good balance point to set the quantity of bands of the reflection film on a specific band to three.

That is, the bandwidth of the reflection film is less than three times the spectrum sampling interval, to ensure that the quantity of continuous interpolations of the reflection spectrum of the to-be-measured object is controlled within three points, reduce impact of a loss of spectrum information of the to-be-measured object due to deduction of some spectrum range information, prevent loss of a characteristic such as an absorption peak of the reflection spectrum of the to-be-measured object, and avoid that the quantity of interpolations is too large or too small during spectrum recovery, which affects accuracy and complexity of the recovery of the reflection spectrum of the to-be-measured object.

It should be noted that the three-band classical temperature measurement method means to establish a universal model for an emissivity function in a short band. In this universal emissivity model, only three wavelengths need to be selected to construct a closed temperature measurement equation, to resolve a problem of mutual coupling between a temperature and emissivity in radiation temperature measurement, thereby implementing accurate measurement of an actual temperature.

It should be noted that the bandwidth and the quantity of bands of the reflection film are merely examples provided for ease of understanding of the solution, and can effectively implement accurate recovery of the reflection spectrum of the to-be-measured object and the reflection spectrum of the active light source 03 on the specific band, and shall not constitute any limitation on the technical solutions of this application.

To ensure a film coating effect of the window sheet 02, a vacuum evaporation film coating process may be used. For example, a mirror-symmetric anti-reflection film is coated on both sides of the window sheet 02, so that the window sheet 02 can anti-reflect the spectrum range covered by the spectrometer 100, and then a mirror-symmetric reflection film is coated on both sides of the window sheet 02. A preparation process of a thin film includes: A base material of the window sheet 02 is placed in a vacuum coating machine, and the film material is heated, so that the film material evaporates or sublimes and is then attached to a surface of the base material. Gaseous film particles arriving at the surface of the base material condense to form a nucleus, and grow into a solid-phase thin film, that is, completing one coating.

It should be understood that a band range of the reflection film that is coated on both sides of the window sheet 02 should be included in a spectral band range of the active light source 03. That is, in an actual design of the reflection film, a spectral band range of the active light source 03 determines a band range of the reflection film coated on both sides of the window sheet 02. In addition, a reflection film on a specific band determines selection of parameters of a coating process, for example, a material of the reflection film (different materials have different dielectric constants, reflectance, and the like), a thickness of the reflection film, or a quantity of layers of the reflection film.

For example, the active light source 03 may be near infrared light or infrared light, a spectral band range of the active light source 03 is 400 nm to 2500 nm, and spectral band ranges of the three selected reflection films may be 600 nm to 1000 nm, 1200 nm to 1600 nm, and 2000 nm to 2400 nm. A material of the reflection film may be silver Ag, chromium Cr, titanium Ti, or copper Cu, a thickness may be greater than 10 nm, and a quantity of film layers may be greater than 10. The foregoing parameters are merely examples provided for ease of understanding of the solution, and are not specifically limited in the technical solutions of this application.

Based on the spectrometer 100 shown in FIG. 1 and operating principles thereof, the following describes the technical solutions of this application in detail with reference to the method for detecting spectral self-reference and self-calibration shown in FIG. 2 and the result of detecting spectral self-reference and self-calibration detection shown in FIG. 3.

First, before delivery of the instrument, the instrument needs to be calibrated and tested, including:

### (1) Spectrum calibration of the instrument:

For example, a built-in active light source 03 of the instrument is turned off, and an external standard calibration device (such as a monochromator or a parallel beam tube) is used to perform spectrum calibration on the instrument, that is, determine a spectrum range, a spectral resolution, and a spectrum wavelength corresponding to a pixel read by the detector, and pre-store the spectrum calibration result in the spectroscopic instrument (such as the data processing module 06). For example, the spectral range of the instrument is from 400 nm to 2500 nm, a spectral resolution of the instrument is 10 nm, and the spectral wavelength corresponding to the pixel read by the detector is 300 nm.

### (2) Derivation function F1 of the reflection spectrum of the built-in active light source 03 of the calibration instrument:

First, a standard diffuse reflection plate is placed in front of the instrument window 01 (for example, a position of the to-be-measured object), a built-in active light source 03 of the instrument is turned on, and a light beam is emitted to the window sheet 02. The window sheet 02 reflects a second light beam on a specific band, and light beams on other bands are incident onto the to-be-measured object through the window sheet 02. A third light beam that undergoes diffuse reflection and the second light beam are incident onto the light splitting module 04 and the detection module 05 of the instrument, and the data processing module 06 obtains a mixed spectrum Zλ. Therefore, the mixed spectrum Zλ is a superimposed spectrum of a spectrum that is reflected by the window sheet 02 after the standard diffuse reflection plate is irradiated by the active light source 03, and a spectrum on a specific band that is reflected by a reflection film on an inner surface of the window sheet 02 after the window sheet 02 is directly irradiated by the active light source 03.

Then, the standard diffuse reflection plate in front of the instrument window 01 is replaced with a standard black plate, the built-in active light source 03 of the instrument is kept in an on state, and the spectrum is collected according to the foregoing implementation. In this case, the obtained spectrum curve is only a spectrum Yλ on a specific band that is reflected by the reflection film on the inner surface of the window sheet 02 after the window sheet 02 is directly irradiated by the active light source 03.

Finally, according to the foregoing two spectrum detections, a spectrum Xλ reflected by the window sheet 02 after the standard diffuse reflection plate is irradiated by the active light source 03 may be obtained by calculating Xλ = Zλ - Yλ. Further, an actual reflection spectrum X'λ of the standard diffuse reflection plate may be recovered by using an interpolation algorithm.

It should be noted that, based on the foregoing step (2), spectrum information such as a center wavelength position, a bandwidth, and intensity of a spectrum on a specific band that is directly reflected by the reflection film on the inner surface of the window sheet 02 and that is of the built-in active light source 03 may also be calibrated before delivery, and stored in the spectroscopic instrument (for example, the data processing module 06), so as to determine a spectrum drift status of the instrument in an actual use process after delivery. For example, the quantity of bands of the reflection film is set to three, the band ranges are respectively 600 nm to 1000 nm, 1200 nm to 1600 nm, and 2000 nm to 2400 nm, and corresponding center wavelengths are respectively 800 nm, 1400 nm, and 2200 nm.

Further, the reflection spectrum of the active light source 03 is obtained through fitting based on the calibrated center wavelength positions and bandwidths of the three specific bands. Based on the reflection spectrum of the active light source 03 that is obtained through fitting and the center wavelength positions and the bandwidths of the three specific bands, a fitting model can be derived reversely. The fitting model is the derivation function F1, and then a derivation function relationship between Yλ and Y'λ is established, which satisfies: Y'λ = F1(Yλ).

Then, in a long-term use process of the instrument, the actual full-spectrum reflection spectrum Y'λ of the active light source 03 may be determined based on the reflection spectrum Yλ of the active light source 03 on the specific band that is obtained in real time and in combination with the derivation function F1 calibrated before delivery.

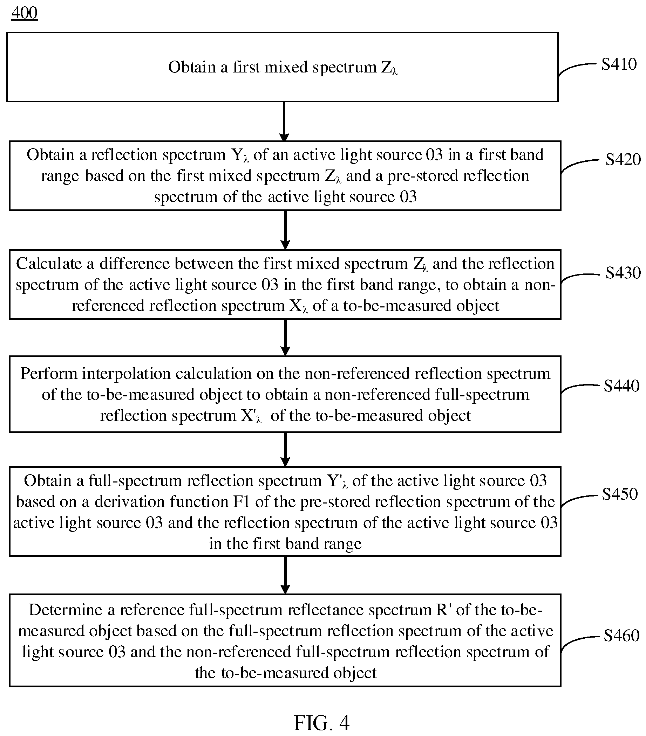

FIG. 4 is a schematic flowchart of a spectral self-reference detection method 400 according to an embodiment of this application. As shown in FIG. 4, an actual use process of the instrument after delivery includes the following steps.

S410: Obtain a first mixed spectrum.

For example, the built-in active light source 03 of the instrument is turned on and aligned to a to-be-measured object to perform spectrum collection. Because mirror-symmetric reflection films of three specific bands are coated on both sides of the window sheet 02, for example, 600 nm to 1000 nm, 1200 nm to 1600 nm, and 2000 nm to 2400 nm, corresponding light beams of the active light source 03 on the three specific bands (for example, a spectral band range is 400 nm to 2500 nm) are directly reflected by the inner surface of the window sheet 02, where the reflected light beams are the second light beam. Light beams in bands (for example, 400 nm to 600 nm, 1000 nm to 1200 nm, 1600 nm to 2000 nm, and 2400 nm to 2500 nm) of the active light source 03 other than the three specific bands are irradiated by the window sheet 02 to the to-be-measured object, and are emitted by the window sheet 02 again after diffuse reflection by the to-be-measured object, where the reflected light beams are the third light beam. Then, the instrument performs splitting and detection processing on the mixed light beam of the second light beam and the third light beam, to obtain the first mixed spectrum Zλ, including a non-referenced real-time reflection spectrum Xλ of the to-be-measured object and a real-time reflection spectrum Yλ on a specific band of the active light source 03. That is, Zλ = Xλ + Yλ.

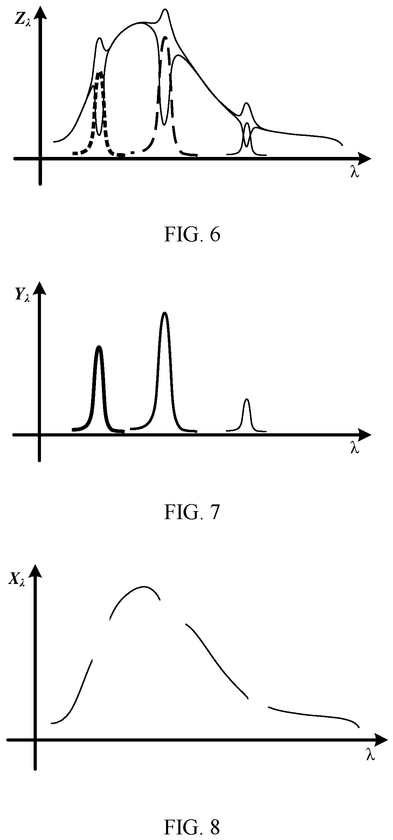

FIG. 6 shows a curve relationship between intensity information (a vertical coordinate) and a wavelength (a horizontal coordinate) of the first mixed spectrum. A solid line represents a spectrum curve of the first mixed spectrum Zλ, a dashed line of a continuous wider band range represents a spectrum curve of a non-referenced real-time reflection spectrum Xλ of the to-be-measured object, and dashed lines of three narrower band ranges represent real-time reflection spectrums Yλ of three specific bands of the active light source 03. For a spectrum curve of the non-referenced real-time reflection spectrum Xλ of the to-be-measured object and a specific implementation process of separating the real-time reflection spectrums Yλ of the active light source 03 on the three specific bands, refer to the following steps S420 and S430. Details are not described herein.

S420: Obtain a reflection spectrum Yλ of the active light source 03 in a first band range based on the first mixed spectrum Zλ and a pre-stored reflection spectrum of the active light source 03.

It should be understood that the pre-stored reflection spectrum of the active light source 03 is reflection spectrum information that is obtained, through measurement, by using the spectrometer when the active light source 03 is turned on during factory calibration, including spectrum information such as a center wavelength position, a bandwidth, and intensity of the active light source 03 in the first band range, and is used to calibrate a spectrum drift of the spectroscopic instrument or the active light source 03 in a subsequent actual use process. For a manner of obtaining the pre-stored reflected spectrum of the active spectrum 03 on the specific band, refer to the foregoing step (2) before delivery. For brevity, details are not described herein again.

For example, the reflection spectrum Yλ of the active light source 03 may be obtained by aligning the intensity of the active light source 03 on the specific band that is calibrated by the instrument before delivery with the intensity of the active light source 03 on the specific band of the first mixed spectrum Zλ. FIG. 7 shows a curve relationship between intensity information (a vertical coordinate) and a wavelength (a horizontal coordinate) of the reflection spectrums Yλ of three specific bands of the active light source 03. Vertical coordinates corresponding to positions of three protrusions in the figure are intensity information corresponding to the active light source 03 in three specific bands.

S430: Calculate a difference between the first mixed spectrum Zλ and the reflection spectrum Yλ of the active light source 03 in the first band range, to obtain a non-referenced reflection spectrum Xλ of the to-be-measured object.

For example, based on a center wavelength position and a bandwidth of the actual reflection spectrum Yλ of the active light source 03, in the first mixed spectrum Zλ, some spectrums of three corresponding specific bands are intercepted, and a spectrum curve obtained after the interception indicates the non-referenced reflection spectrum Xλ of the to-be-measured object. That is, a difference between intensity information of the first mixed spectrum Zλ and intensity information of the reflection spectrum Yλ of the active light source 03 is calculated, and a vertical coordinate of the obtained spectrum curve is intensity information of the non-referenced reflection spectrum Xλ of the to-be-measured object. FIG. 8 shows a curve relationship between intensity information (a vertical coordinate) and a wavelength (a horizontal coordinate) of the non-referenced reflection spectrum Xλ of the to-be-measured object after the interception.

Based on the foregoing steps S420 and S430, separation processing on the first mixed spectrum Zλ is completed, to obtain the reflection spectrum Yλ of the active light source 03 and the actual non-referenced reflection spectrum Xλ of the to-be-measured object.

S440: Perform interpolation calculation on the non-referenced reflection spectrum Xλ of the to-be-measured object to obtain the non-referenced full-spectrum reflection spectrum X'λ of the to-be-measured object.

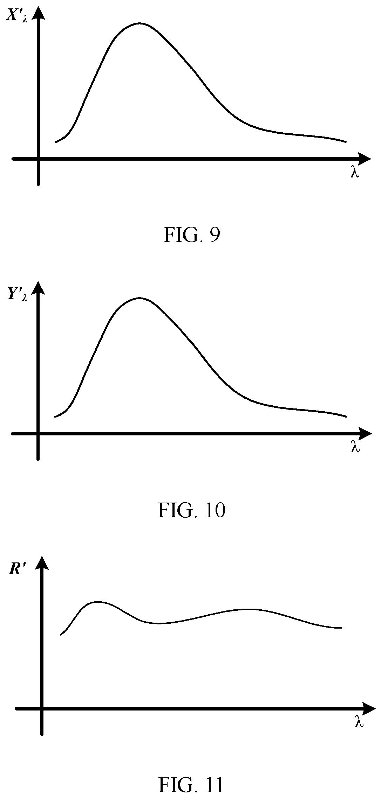

For example, interpolation calculation is performed on the non-referenced reflection spectrum Xλ of the to-be-measured object after the interception, so that the non-referenced full-spectrum reflection spectrum X'λ of the to-be-measured object can be recovered. For a specific implementation of interpolation processing, refer to an existing spectral interpolation technology. Details are not described herein. FIG. 9 shows a curve relationship between intensity information (a vertical coordinate) and a wavelength (a horizontal coordinate) of the non-referenced full-spectrum reflection spectrum X'λ of the to-be-measured object.

S450: Obtain a full-spectrum reflection spectrum Y'λ of the active light source 03 based on a derivation function F1 of the pre-stored reflection spectrum of the active light source 03 and the reflection spectrum Yλ of the active light source 03 in the first band range.

It should be understood that the derivation function F1 of the pre-stored reflection spectrum of the active light source means that during factory calibration, the reflection spectrum of the active light source 03 is obtained through fitting based on three specific center wavelengths in the first band range, for example, 800 nm, 1400 nm, and 2200 nm. F1 is used to determine, in a subsequent actual use process, the full-spectrum reflection spectrum of the active light source 03 based on reflection spectrums of the active light source 03 on the three specific bands that are collected in real time. For a manner of obtaining the derivation function F1 of the pre-stored reflection spectrum of the active light source, refer to the foregoing step (2) before delivery. For brevity, details are not described herein again. For a specific implementation of the fitting processing, refer to an existing spectrum fitting technology. Details are not described herein. FIG. 10 shows a curve relationship between intensity information (a vertical coordinate) and a wavelength (a horizontal coordinate) of a full-spectrum reflection spectrum Y'λ of the active light source.

Based on the foregoing steps S440 and S450, recovery processing of the reflection spectrum Yλ of the active light source 03 and the non-referenced reflection spectrum Xλ of the to-be-measured object is completed, that is, fitting processing is performed on the reflection spectrum Yλ of the active light source 03, and interpolation processing is performed on the non-referenced reflection spectrum Xλ of the to-be-measured object.

S460: Determine reference full-spectrum reflectance spectrum information R' of the to-be-measured object based on the non-referenced full-spectrum reflection spectrum X'λ of the to-be-measured object and the full-spectrum reflection spectrum Y'λ of the active light source 03.

For example, a ratio of the full-spectrum reflection spectrum X'λ of the to-be-measured object that is obtained in step S440 to the full-spectrum reflection spectrum Y'λ of the active light source 03 that is obtained in step S450 is calculated, to obtain a reference full-spectrum reflectance spectrum R' of the to-be-measured object, that is, R'=X'λ/Y'λ. FIG. 11 shows a curve relationship between a reference full-spectrum reflectance spectrum information R' (a vertical coordinate) and a wavelength (a horizontal coordinate) of the to-be-measured object.

Therefore, according to the foregoing implementation, the spectroscopic instrument completes collection and calibration of the full-spectrum spectral reflectance curve of the to-be-measured object and can obtain the reflectance spectrum information of the to-be-measured object through one measurement, thereby simplifying an operation process and further determining a structure, composition, or the like of the object.

Considering that with the long-term use of the instrument, the collected spectrum may be shifted, resulting in an error in the results of spectral detection. Therefore, self-calibration may be performed during the use of the instrument to ensure accuracy of the collected spectrum.

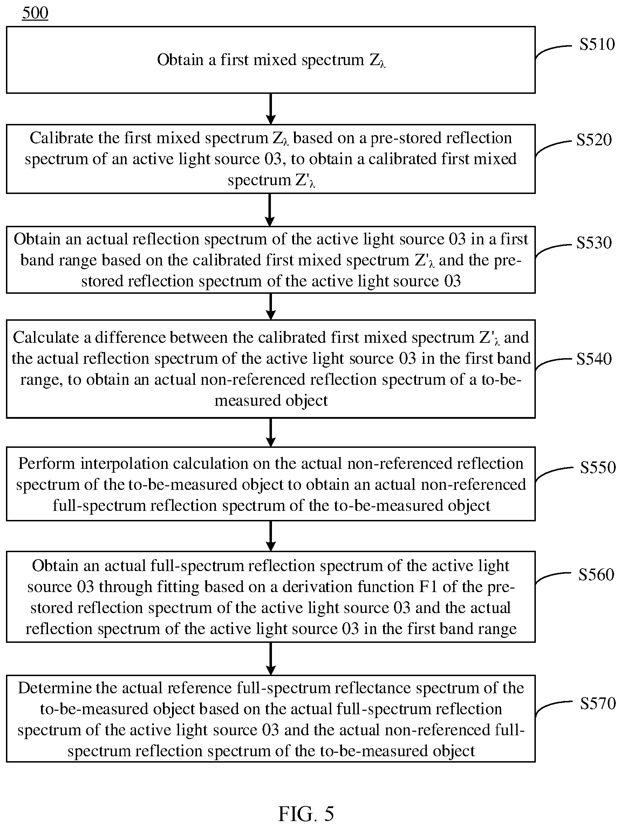

FIG. 5 is a schematic flowchart of a method 500 for detecting a spectral self-reference and self-calibration according to an embodiment of this application. As shown in FIG. 5, an actual use process of the instrument after delivery includes the following steps.

S510: Obtain a first mixed spectrum Zλ.

For a specific implementation, refer to step S410 in the method 400. For brevity, details are not described herein again.

S520: Calibrate the first mixed spectrum Zλ based on a pre-stored reflection spectrum of an active light source 03, to obtain a calibrated first mixed spectrum Z'λ.

For example, based on a center wavelength and a bandwidth of the active light source 03 on a specific band that are calibrated before delivery of the instrument, for example, 800 nm, 1400 nm, and 2200 nm, the real-time reflection spectrum Yλ of the active light source 03 is calibrated, that is, it is determined whether the spectrum of the instrument deviates; and if the spectrum of the instrument deviates, calibration is performed. Further, an extremum value is searched near the center wavelength of each specific band, and the actual reflection spectrum of the active light source 03 in each specific band is obtained through fitting, that is, the actual center wavelength position and bandwidth of the active light source 03 are obtained through fitting.

It should be noted that, if the instrument is used for a long time after delivery, a pre-stored center wavelength position of the active light source 03 may be different from the actual center wavelength position of the active light source 03 that is obtained through fitting, which indicates that the reflection spectrum of the active light source 03 deviates. In this case, the reflection spectrum of the active light source 03 needs to be calibrated, and the actual center wavelength position that is obtained through fitting is aligned with the pre-stored center wavelength position and bandwidth and adjusted. For example, the actual center wavelength that is obtained through fitting deviates to the right as a whole. If the instrument is used for a short period of time after delivery, the pre-stored center wavelength position of the active light source 03 may be the same as the actual center wavelength position of the active light source 03 that is obtained through fitting, which indicates that the reflection spectrum of the active light source 03 does not deviate.

For example, if the instrument is used for a long time after delivery, the pre-stored center wavelength position of the active light source 03 may be different from the actual center wavelength position of the active light source 03 that is obtained through fitting, which indicates that the reflection spectrum of the active light source 03 deviates, and the first mixed spectrum Zλ needs to be further calibrated based on the actual reflection spectrum of the fitted active light source 03. For example, the collected first mixed spectrum Zλ deviates to the right as a whole, to obtain the calibrated first mixed spectrum Z'λ. If the instrument is used for a short period of time after delivery, the pre-stored center wavelength position of the active light source 03 may be the same as the actual center wavelength position of the active light source 03 that is obtained through fitting, which indicates that the reflection spectrum of the active light source 03 does not deviate. In this case, Z'λ=Zλ.

It should be noted that calibration of the first mixed spectrum is an optional step, and spectrum separation and spectrum recovery in subsequent steps based on the calibrated mixed spectrum may be optional steps. It should be understood that, based on calibration of the instrument and calibration of the collected spectrum, it can be ensured that an obtained reflectance spectrum curve of a to-be-measured object is more accurate, thereby ensuring that accurate qualitative and quantitative analyses are performed on a structure and composition of a substance. Optionally, calibration is performed each time an instrument is used to perform spectrum measurement, or calibration may be performed periodically, for example, calibration is performed once at regular intervals, or calibration is performed once after spectrum detection is performed every 10 times. This is not specifically limited in this application.

S530: Obtain an actual reflection spectrum of the active light source 03 in a first band range based on the calibrated first mixed spectrum Z'λ and the pre-stored reflection spectrum of the active light source 03.

For example, the actual reflection spectrum of the active light source 03 may be obtained by aligning intensity of the active light source 03 that is calibrated before delivery of the instrument on the specific band with intensity of the calibrated active light source 03 of the first mixed spectrum Z'λ on the specific band.

S540: Calculate a difference between the calibrated first mixed spectrum Z'λ and the actual reflection spectrum of the active light source 03 in the first band range, to obtain an actual non-referenced reflection spectrum of the to-be-measured object.

For example, based on a center wavelength position and a bandwidth of the actual reflection spectrum of the active light source 03, some spectrums of three corresponding specific bands are intercepted from the calibrated first mixed spectrum Z'λ, and a spectrum curve after the interception is the actual non-referenced reflection spectrum Xλ of the to-be-measured object. That is, a difference between intensity information of the calibrated first mixed spectrum Z'λ and intensity information of the actual reflection spectrum of the active light source 03 is calculated, and the obtained vertical coordinate of the spectrum curve is the intensity information of the actual non-referenced reflection spectrum of the to-be-measured object.

Based on the foregoing steps S530 and S540, separation processing on the calibrated first mixed spectrum Z'λ is completed, to obtain the actual reflection spectrum of the active light source 03 and the actual non-referenced reflection spectrum of the to-be-measured object.

S550: Perform interpolation calculation on the actual non-referenced reflection spectrum of the to-be-measured object to obtain an actual non-referenced full-spectrum reflection spectrum of the to-be-measured object.

For example, interpolation calculation is performed on the non-referenced reflection spectrum of the to-be-measured object after the interception, so that the actual non-referenced full-spectrum reflection spectrum of the to-be-measured object can be recovered. For a specific implementation of interpolation processing, refer to an existing spectral interpolation technology. Details are not described herein.

S560: Obtain an actual full-spectrum reflection spectrum of the active light source 03 based on a derivation function F1 of the pre-stored reflection spectrum of the active light source 03 and the actual reflection spectrum of the active light source 03 in the first band range.

It should be understood that the derivation function F1 of the pre-stored reflection spectrum of the active light source means that during factory calibration, the actual reflection spectrum of the active light source 03 is obtained through fitting based on three specific center wavelengths in the first band range, for example, 800 nm, 1400 nm, and 2200 nm. F1 is used to determine, in a subsequent actual use process, a full-spectrum reflection spectrum of the active light source 03 based on reflection spectrums of the active light source 03 on the three specific bands that are collected in real time. For a manner of obtaining the derivation function F1 of the pre-stored reflection spectrum of the active light source, refer to the foregoing step (2) before delivery. For brevity, details are not described herein again. For a specific implementation of fitting processing, refer to an existing spectrum fitting technology. Details are not described herein. Based on the foregoing steps S550 and S560, recovery processing of the actual reflection spectrum of the active light source 03 and the actual non-referenced reflection spectrum of the to-be-measured object is completed, that is, fitting processing is performed on the actual reflection spectrum of the active light source 03, and interpolation processing is performed on the actual non-referenced reflection spectrum of the to-be-measured object.

S570: Determine actual reference full-spectrum reflectance spectrum information of the to-be-measured object based on the actual non-referenced full-spectrum reflection spectrum of the to-be-measured object and the actual full-spectrum reflection spectrum of the active light source 03.

For example, a ratio of the actual full-spectrum reflection spectrum of the to-be-measured object that is obtained in step S550 to the actual full-spectrum reflection spectrum of the active light source 03 that is obtained in step S560 is calculated, to obtain the actual reference full-spectrum reflectance spectrum of the to-be-measured object.

Therefore, according to the foregoing implementation, the spectroscopic instrument completes collection and calibration of the actual full-spectrum spectral reflectance curve of the to-be-measured object, thereby simplifying a self-reference process of the spectrum of the to-be-measured object and ensuring accuracy of spectrum collection.

In conclusion, in this technical solution of this application, the window sheet 02 that can reflect a specific wavelength is used, and both the reflection spectrum information of the active light source 03 on the specific band and the reflection spectrum information of the to-be-measured object may be obtained through one measurement, so as to obtain the reflectance spectrum information of the to-be-measured object. In addition, spectrum self-calibration can be implemented by using a spectrum to correct the spectrum drift of the instrument. According to the apparatus disclosed in this application, there is no need to add additional accessories or increase the volume of the instrument, so that a spectral reference measurement process is simplified, and reference reflectance spectrum information of the to-be-measured object is quickly and accurately obtained. A use and operation solution is simple, and no additional accessory is required, thereby facilitating integration of the spectrometer and application of the spectrometer in a scenario such as fast real-time spectrum analysis.

It should be understood that a commercial portable or handheld spectrum analyzer has gradually compressed a spectrometer to a centimeter level and continuously compressed the volume to a millimeter level or even a micron level. Integrating the spectrometer 100 shown in FIG. 1 into a chip or an electronic device such as a smartphone or a notebook computer is an inevitable trend.

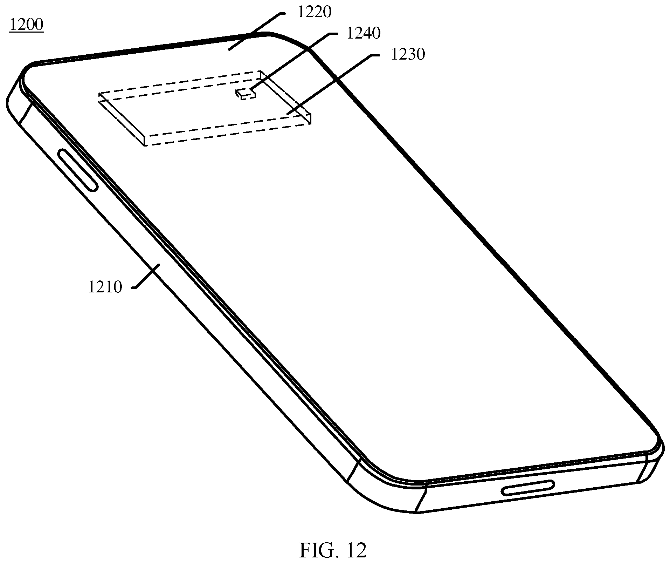

FIG. 12 is a diagram of a structure of an electronic device 1200 according to an embodiment of this application. The electronic device 1200 may be a terminal consumer product or a 3C electronic product (computer (computer), communication (communication), or consumer (consumer) electronic product), for example, a device such as a mobile phone, a portable device, a tablet computer, an e-reader, a notebook computer, a digital camera, a wearable device, a headset, a watch, a digital camera, or a stylus. The electronic device 1200 may alternatively be a vehicle, or a control device, a head unit, an in-vehicle device, or the like applied to a vehicle. An embodiment shown in FIG. 12 is described by using an example in which the electronic device 1200 is a mobile phone.

The electronic device 1200 may include a housing 1210, a display 1220, and a circuit board assembly 1230. The display 1220 and the circuit board assembly 1230 are installed on the housing 1210. Specifically, the housing 1210 may include a frame and a rear cover. The frame may be located between the display 1220 and the rear cover. The frame may surround a periphery of the display 1220 and a periphery of the rear cover, and the display 1220 and the rear cover are spaced apart from each other. A cavity formed between the display 1220, the frame, and the rear cover may be used to accommodate the circuit board assembly 1230, and the housing 1210 may be configured to fasten the circuit board assembly 1230. The circuit board assembly 1230 may include a circuit board and a spectrometer 1240 disposed on the circuit board.

The circuit board may be a printed circuit board, a flexible circuit board, an integrated circuit (or referred to as a chip), or the like. According to a quantity of electronic components carried on the circuit board, the circuit board may be a single-sided board or double-sided board. The single-sided board may refer to a circuit board that carries electronic components on one side. The double-sided board may refer to a circuit board that carries electronic components on both sides. According to types of the electronic components carried on the circuit board, the circuit board may be a mainboard, a module board, a frame board, a radio frequency board, an application processor (application processor, AP) board, or the like. The mainboard may be a main circuit board in the electronic device. The RF board may be configured to carry a radio frequency chip, a radio frequency power amplifier, a wireless fidelity (wireless fidelity, Wi-Fi) chip, and the like. The AP board may be configured to carry a system on chip (system on chip, SOC) element, a double data rate memory, and the like.

Optionally, the electronic device further includes a processor. The processor may analyze and calibrate a spectrum of a to-be-measured object, that is, quickly and accurately obtain reflectance spectrum information of the to-be-measured object. A specific implementation thereof is similar to a function of a data processing module in the spectroscopic instrument, and details are not described herein again.

Specifically, fruit sugar degree detection is used as an example. A detection window of the spectrometer 1240 of the electronic device 1200 is aligned with a fruit to collect a spectrum curve of the fruit, and a sugar degree of the fruit can be quickly calculated by using a built-in model algorithm of the spectrometer 1240, thereby implementing an objective of fast sugar degree detection. In addition, the spectrometer 1240 can also detect alcohol content of liquor, and protein content of milk and milk powder, and even distinguish whether vegetables are organically grown.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A spectrometer, comprising: a window, an active light source, a window sheet, a light splitting module, a detection module, and a data processing module, wherein the window sheet is mounted in the window, the window sheet and the light splitting module share an optical axis, a mirror-symmetric reflection film is coated on both sides of the window sheet, and a band range of the reflection film is a first band range;
the active light source is configured to transmit a first light beam to the window sheet;
the window sheet is configured to reflect a second light beam to the light splitting module, wherein a band range of the second light beam is the first band range;
the window sheet is further configured to transmit a third light beam to a to-be-measured object, so that the third light beam is incident onto the light splitting module through diffuse reflection on a surface of the to-be-measured object, wherein a band range of the third light beam is a band range in a band range of the first light beam other than the first band range;
the light splitting module is configured to split a mixed light beam of the second light beam and the third light beam;
the detection module is configured to detect split light beams to obtain a first mixed spectrum;
the data processing module is configured to separate the first mixed spectrum to obtain a full-spectrum reflection spectrum of the active light source and a non-referenced full-spectrum reflection spectrum of the to-be-measured object; and
the data processing module is further configured to determine a reference full-spectrum reflectance spectrum of the to-be-measured object based on the full-spectrum reflection spectrum of the active light source and the non-referenced full-spectrum reflection spectrum of the to-be-measured object.

2. The spectrometer according to claim 1, wherein that the data processing module is configured to separate the first mixed spectrum to obtain a full-spectrum reflection spectrum of the active light source and a non-referenced full-spectrum reflection spectrum of the to-be-measured object is specifically:
obtaining a reflection spectrum of the active light source in the first band range based on the first mixed spectrum and a pre-stored reflection spectrum of the active light source;
calculating a difference between the first mixed spectrum and the reflection spectrum of the active light source in the first band range, to obtain a non-referenced reflection spectrum of the to-be-measured object;
performing interpolation calculation on the non-referenced reflection spectrum of the to-be-measured object, to obtain the non-referenced full-spectrum reflection spectrum of the to-be-obtaining the full-spectrum reflection spectrum of the active light source through fitting based on a derivation function of the pre-stored reflection spectrum of the active light source and the reflection spectrum of the active light source in the first band range.

3. The spectrometer according to claim 1 or 2, wherein the data processing module is further configured to:
calibrate the first mixed spectrum based on the pre-stored reflection spectrum of the active light source.

4. The spectrometer according to any one of claims 1 to 3, wherein there are a plurality of active light sources, and the plurality of active light sources are evenly distributed in an inner edge area of the window sheet.

5. The spectrometer according to any one of claims 1 to 4, wherein the first light beam fully covers the window.

6. The spectrometer according to any one of claims 1 to 5, wherein a bandwidth of the reflection film is less than or equal to a spectral resolution of the spectrometer.

7. The spectrometer according to any one of claims 1 to 6, wherein a quantity of bands of the reflection film is greater than or equal to one.

8. An electronic device, comprising a spectrometer according to any one of claims 1 to 7.

9. An electronic device, comprising: a spectrometer and a processor, wherein the spectrometer comprises a window, an active light source, a window sheet, a light splitting module, and a detection module, wherein the window sheet is mounted in the window, the window sheet and the light splitting module share an optical axis, a mirror-symmetric reflection film is coated on both sides of the window sheet, and a band range of the reflection film is a first band range;
the active light source is configured to transmit a first light beam to the window sheet;
the window sheet is configured to reflect a second light beam to the light splitting module, wherein a band range of the second light beam is the first band range;
the window sheet is further configured to transmit a third light beam to a to-be-measured object, so that the third light beam is incident onto the light splitting module through diffuse reflection on a surface of the to-be-measured object, wherein a band range of the third light beam is a band range in a band range of the first light beam other than the first band range;
the light splitting module is configured to split a mixed light beam of the second light beam and the third light beam;
the detection module is configured to detect split light beams to obtain a first mixed spectrum;
the processor is configured to separate the first mixed spectrum to obtain a full-spectrum reflection spectrum of the active light source and a non-referenced full-spectrum reflection
the processor is further configured to determine a reference full-spectrum reflectance spectrum of the to-be-measured object based on the full-spectrum reflection spectrum of the active light source and the non-referenced full-spectrum reflection spectrum of the to-be-measured object.

10. The electronic device according to claim 9, wherein that the processor is configured to separate the first mixed spectrum to obtain a full-spectrum reflection spectrum of the active light source and a non-referenced full-spectrum reflection spectrum of the to-be-measured object is specifically:
obtaining a reflection spectrum of the active light source in the first band range based on the first mixed spectrum and a pre-stored reflection spectrum of the active light source;
calculating a difference between the first mixed spectrum and the reflection spectrum of the active light source in the first band range, to obtain a non-referenced reflection spectrum of the to-be-measured object;
performing interpolation calculation on the non-referenced reflection spectrum of the to-be-measured object, to obtain the non-referenced full-spectrum reflection spectrum of the to-be-measured object; and
obtaining the full-spectrum reflection spectrum of the active light source through fitting based on a derivation function of the pre-stored reflection spectrum of the active light source and the reflection spectrum of the active light source in the first band range.

11. The electronic device according to claim 9 or 10, wherein the processor is further configured to:
calibrate the first mixed spectrum based on the pre-stored reflection spectrum of the active light source.

12. The electronic device according to any one of claims 9 to 11, wherein there are a plurality of active light sources, and the plurality of active light sources are evenly distributed in an inner edge area of the window sheet.

13. The electronic device according to any one of claims 9 to 12, wherein the first light beam fully covers the window.

14. The electronic device according to any one of claims 9 to 13, wherein a bandwidth of the reflection film is less than or equal to a spectral resolution of the spectrometer.

15. The electronic device according to any one of claims 9 to 14, wherein a quantity of bands of the reflection film is greater than or equal to one.
